# EUROPÄISCHE PATENTSCHRIFT

(11) **EP 1 560 319 B1**
(45) Veröffentlichungstag und Bekanntmachung des Hinweises auf die Patenterteilung: **08.11.2006**
(21) Anmeldenummer: 04103815.9
(22) Anmeldetag: 06.08.2004
(51) Int. Cl.: H02K 29/08, H02K 5/10, H02K 3/50

(54) **Kollektorloser Gleichstrommotor**
Electronically commutated dc motor
Moteur à courant continu sans collecteur

(30) Priorität: 28.01.2004 DE 102004004227
(43) Veröffentlichungstag der Anmeldung: 03.08.2005
(73) Patentinhaber: ebm-papst Mulfingen GmbH & Co.KG, 74673 Mulfingen (DE)
(72) Erfinder: Best, Dieter, 74653 Ingelfingen (DE); Ströbel, Othmar, 74572 Blaufelden (DE); Futterlieb, Gerd, Dipl.-Ing (FH), 74423 Obersontheim (DE); Haaf, Martin, Dipl.-Ing. (FH), 97980 Bad Mergentheim (DE); Sauer, Thomas, Dipl.-Ing., 65510 Idstein (DE); Schumann, Reinhold, 97996 Niederstetten (DE)
(74) Vertreter: Patentanwälte Dr. Solf & Zapf

(56) Entgegenhaltungen:
- EP-A- 1 361 644
- WO-A-01/28076
- US-A- 4 818 907

## Beschreibung

Die vorliegende Erfindung betrifft einen kollektorlosen, elektronisch kommutierten Gleichstrommotor mit einem Stator und einem den Stator von einer Seite her als Außenläufer topfartig umschließenden Rotor, der dadurch einen Teil eines Motorgehäuses bildet, sowie einem sich als weiterer Teil des Motorgehäuses auf der dem Außenläufer axial gegenüberliegenden Seite an diesen und an den Stator anschließenden, eine Steuerelektronik enthaltenden Elektronikgehäuse, wobei axial zwischen einem Wickelkopf des Stators und einer sich quer zu einer Läuferachse erstreckenden Bodenwandung des Elektronikgehäuses ein im Wesentlichen scheibenförmiger Wickelkopfschutz zur Abdichtung von Anschluss-Durchführungen der Bodenwandung angeordnet ist.

Ein derartiger Gleichstrommotor ist in dem Dokument DE 202 07 233 U1 beschrieben. An den Stator und den Außenläufer (Rotor) schließt sich ein Elektronikgehäuse an, in dem die Steuerelektronik des Motors untergebracht ist. Die dem Stator zugewandte Bodenplatte des Elektronikgehäuses ist von einem Motorflansch gebildet, der einstückig mit einem Lagertragrohr ausgeführt ist. Das Lagertragrohr nimmt einerseits in seinem Inneren Drehlager des Außenläufers auf und trägt andererseits auf seiner Außenfläche ein Statorblechpaket mit Statorwicklungen. Die Bodenwandung beziehungsweise der Motorflansch weist Durchführungen auf, die von Anschlusselementen zur elektrischen Anschlussverbindung der Statorwicklungen an der Steuerelektronik durchgriffen werden. Um eine Abdichtung des Elektronikgehäuses gegenüber der Umgebung zu erreichen, ist u. a. ein scheibenförmiger Wickelkopfschutz - dort auch "erstes Abdichtelement" genannt - zwischen der Bodenwandung und dem Wickelkopf des Stators angeordnet, wobei die Anschlusselemente (Kontaktfahnen) unter Dichtwirkung durch Schlitze (Dichtlippen) des Wickelkopfschutzes geführt sind. Dieser bekannte Gleichstrommotor ist als sogenannter sensorloser Motor ausgeführt. Dies bedeutet, dass er keine Rotor-Drehstellungssensoren (beispielsweise Hall-Sensoren) benötigt, die durch Erfassung des Rotor-Magnetfeldes zur Kommutierungssteuerung dienen.

In manchen Fällen ist es aber erwünscht, eine Kommutierung mit Sensoren (Hall-Sensoren) vorzusehen.

Der Erfindung liegt die Aufgabe zugrunde, einen Gleichstrommotor der eingangs beschriebenen Art zu schaffen, bei dem auf einfache und herstellungsgünstige Weise und insbesondere auch bei Vorhandensein mindestens eines Drehstellungssensors eine besonders sichere Abdichtung des Elektronikgehäuses gewährleistet ist. Zudem soll vorzugsweise im Falle eines Sensor-Motors eine exakte Sensor-Fixierung und -Positionierung gegenüber dem zu erfassenden Magnetfeld des Rotormagneten sichergestellt sein.

Erfindungsgemäß wird dies dadurch erreicht, dass der Wickelkopfschutz mindestens eine in Richtung des Wickelkopfes vorspringende Aufnahmetasche für einen magnetfeldempfindlichen Drehstellungssensor derart aufweist, dass der durch eine Durchführung der Bodenwandung mit der Steuerelektronik verbundene und in der in Richtung des Wickelkopfes geschlossenen Aufnahmetasche sitzende Drehstellungssensor zur Erfassung eines Magnetfeldes des Außenläufers hinreichend nah an diesem angeordnet ist und auf einem länglichen, streifenförmigen und in die zugehörige Aufnahmetasche eingreifenden Träger sitzt, der nach Art einer Leiterplatte ausgebildet ist. Im Falle eines mehrsträngigen Motors sind entsprechend mehrere, beispielsweise drei Drehstellungssensoren vorgesehen, die in jeweils einer separaten Aufnahmetasche des Wickelkopfschutzes sitzen. Die in Richtung des Stators geschlossene Ausführung der Aufnahmetasche (n) gewährleistet die angestrebte gute Abdichtung. Zudem kann auch eine exakte und sichere Positionierung erreicht werden, indem der jeweilige Sensor spielfrei und gut fixiert in seiner Aufnahmetasche sitzt. Die Aufnahmetaschen sind dabei so dicht an den Rotormagnet herangeführt, dass sie diesem in nur geringem radialen Abstand gegenüber stehen, so dass das Magnetfeld sicher erfaßt werden kann.

Als Drehstellungssensoren werden bevorzugt Hall-Sensoren, insbesondere Hall-IC's verwendet. Indem der bzw. jeder Drehstellungssensor auf einem formstabilen, bevorzugt länglichen, streifenförmigen und in die zugehörige Aufnahmetasche eingreifenden Träger angeordnet ist, kann vorteilhafterweise auch ein relativ großer Abstand zwischen der Steuerelektronik und dem im Bereich des zu erfassenden Magnetfeldes zu plazierenden Drehstellungssensor überbrückt werden. Der bzw. jeder Träger ist bevorzugt nach Art einer Leiterplatte ausgebildet, die ihrerseits mechanisch und elektrisch durch die jeweilige zugehörige Durchführung der Bodenwandung des Elektronikgehäuses hindurch mit einer Leiterplatte der Steuerelektronik verbunden ist. Der Träger bzw. die Sensor-Leiterplatte (Hall-IC-Leiterplatte) kann hierbei direkt mit der Leiterplatte der Steuerelektronik verlötet oder mittelbar über eine geeignete Steckverbindung verbunden sein.

Zusätzlich oder aber alternativ zu der bisher beschriebenen erfindungsgemäßen Ausgestaltung gemäß Anspruch 1 kann mit besonderem Vorteil vorgesehen sein, dass die Bodenwandung des Elektronikgehäuses derart beidseitig mit einem elektrisch isolierenden Kunststoff umspritzt ist, dass durch das angespritzte Kunststoffmaterial auf der dem Stator zugewandten Seite der Wickelkopfschutz und auf der dem Elektronikgehäuse zugewandten Seite eine Abdeckscheibe gebildet sind. Durch diese beidseitige Umspritzung der Bodenwandung wird eine verbesserte Dichtigkeit und Isolation des Elektronikgehäuses erreicht. Auch die Kriechstromfestigkeit wird verbessert. Das Umspritzen kann vorteilhafterweise kostengünstig und prozeßsicher in einem Arbeitsgang erfolgen. Diese erfindungsgemäße Ausgestaltung ist auch für sensorlose Motor-Ausführungen geeignet, d. h. für Ausführungen ohne Aufnahmetaschen für Drehstellungssensoren.

Der erfindungsgemäße Motor entspricht vorteilhafterweise einer hohen IP-Schutzart nach DIN/IEC EN 60034-Teil 5 (z. B. IP 54), indem das Elektronikgehäuse effektiv abgedichtet ist. Dabei ist es zudem vorteilhaft, wenn zwischen dem Stator und dem Außenläufer eine Rotationsdichtung - insbesondere in Form einer Labyrinthdichtung - vorgesehen ist. Dadurch ist ein Eindringen von z. B. Spritzwasser in das Motorgehäuse durch den Spalt zwischen Stator und Rotor praktisch ausgeschlossen; der Motor weist somit im Grunde ein gekapseltes Motorgehäuse auf. Deshalb sind in weiterer vorteilhafter Ausgestaltung Mittel zur inneren Kühlung vorgesehen, insbesondere mit einem inneren, mit dem Außenläufer rotierenden Lüfterrad zur Luftverwirbelung im Bereich der Steuerelektronik. Im Betrieb entstehende Wärme wird über den metallischen Motorflansch nach außen an die Umgebung abgeführt.

Weitere vorteilhafte Ausgestaltungen der Erfindung sind in den Unteransprüchen sowie der folgenden Beschreibung enthalten.

Anhand von bevorzugten, in den Zeichnungen veranschaulichten Ausführungsbeispielen des erfindungsgemäßen Gleichstrommotors soll im folgenden die Erfindung genauer erläutert werden. Dabei zeigen:
- Fig. 1: einen Axialschnitt einer ersten Ausführungsform eines erfindungsgemäßen Gleichstrommotors,
- Fig. 2: eine Ausschnittvergrößerung des Bereichs Z in Fig. 1,
- Fig. 3 a und b: jeweils eine Perspektivansicht eines Sensorelementes mit zugehörigem Träger (Vorder- und Rückseite),
- Fig. 4: eine perspektivische Explosionsdarstellung der Einzelteile des erfindungsgemäßen Gleichstrommotors gemäß Fig. 1,
- Fig. 5 und 6: Perspektivansichten des Wickelkopfschutzes der Motor-Ausführung nach Fig. 1 bis 4, und zwar

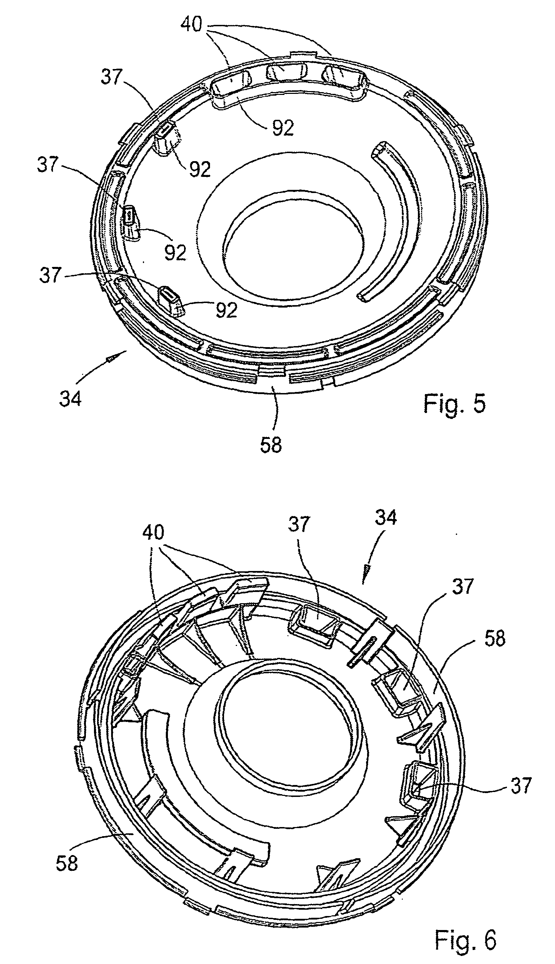

Fig. 5 die der Steuerelektronik zugewandte Seite und
Fig. 6 die dem Stator zugewandte Seite,

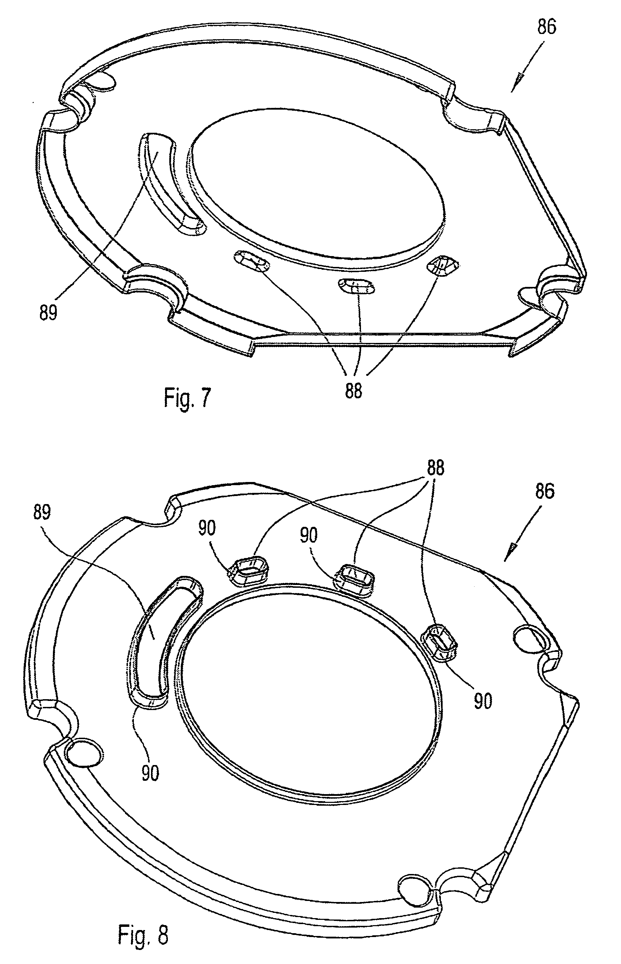

- Fig. 7 und 8: Perspektivansichten einer zusätzlichen, innerhalb des Elektronikgehäuses auf der Bodenwandung anzuordnenden Abdeckscheibe,

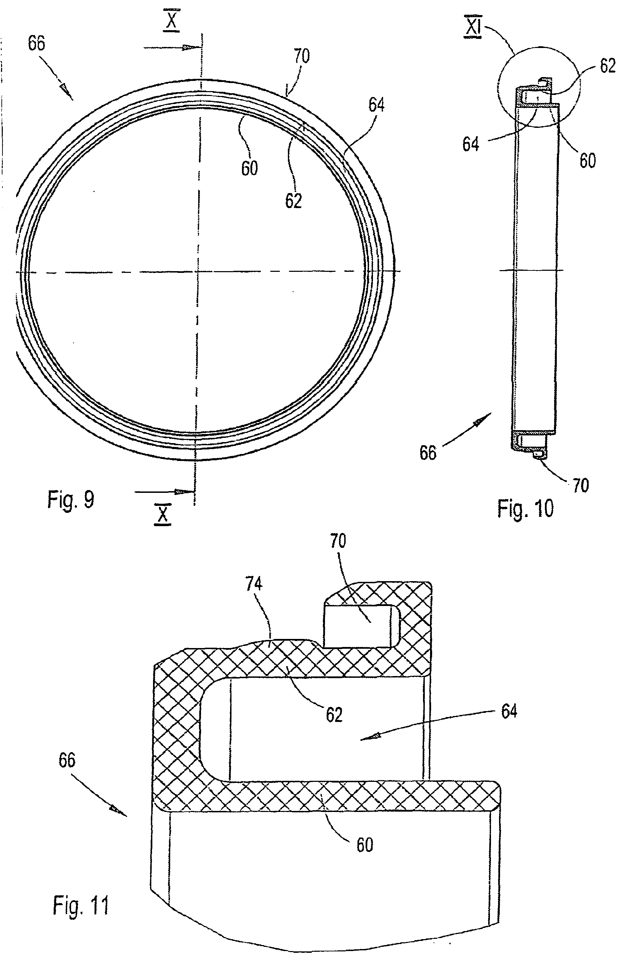

- Fig. 9: eine axiale Draufsicht eines Ringelementes, das als Teil einer Labyrinthdichtung mit dem Außenläufer zu verbinden ist,
- Fig. 10: einen Schnitt in der Ebene X-X gemäß Fig. 9,
- Fig. 11: eine vergrößerte Darstellung des Bereichs XI in Fig. 10,

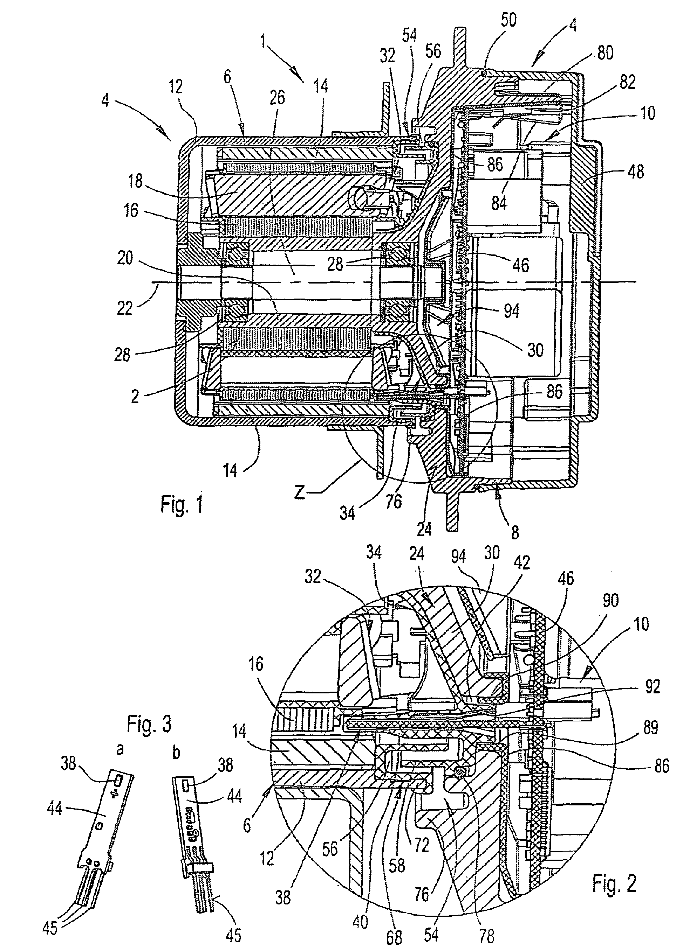

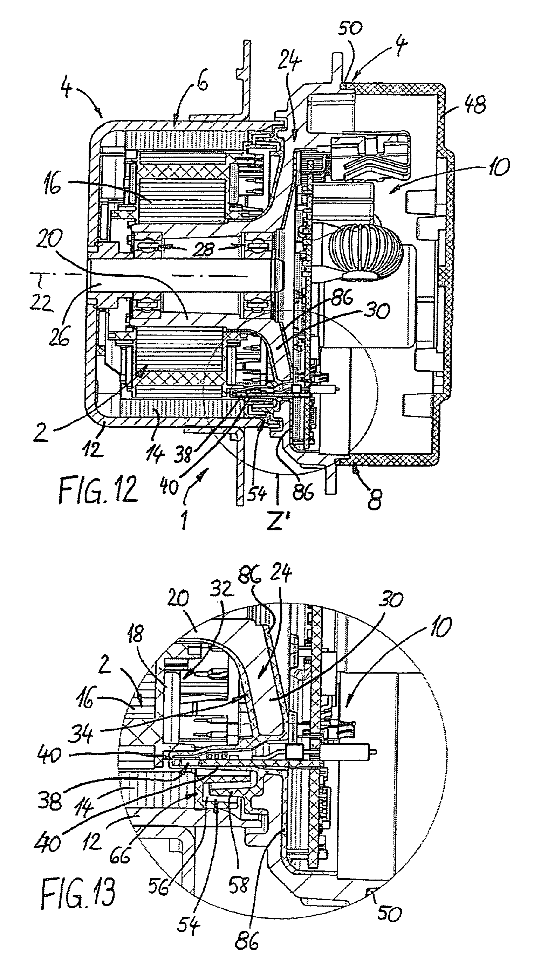

- Fig. 12: einen Axialschnitt wie in Fig. 1 einer zweiten erfindungsgemäßen Ausführungsform des Gleichstrommotors,

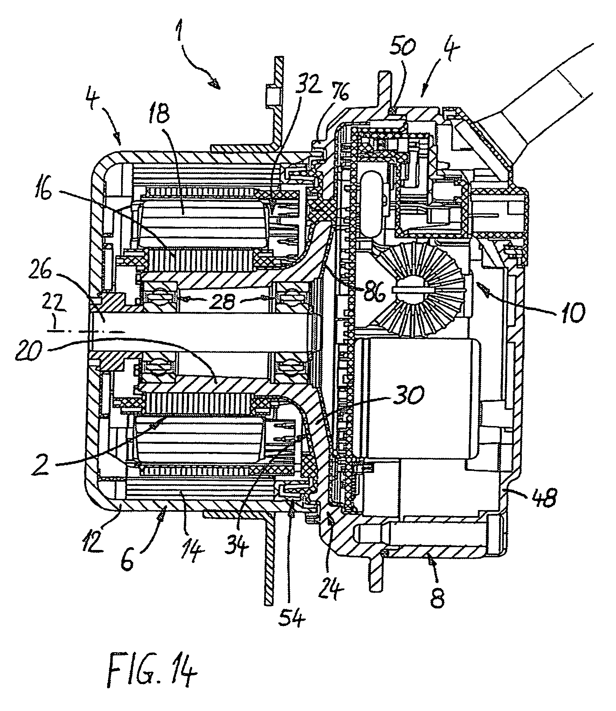

- Fig. 13: eine Ausschnittvergrößerung des Bereichs Z' in Fig. 12 (analog zu Fig. 2),
- Fig. 14: den Motor gemäß Fig. 12 in einer dazu um 90° gedrehten Axialschnitt-Ebene und

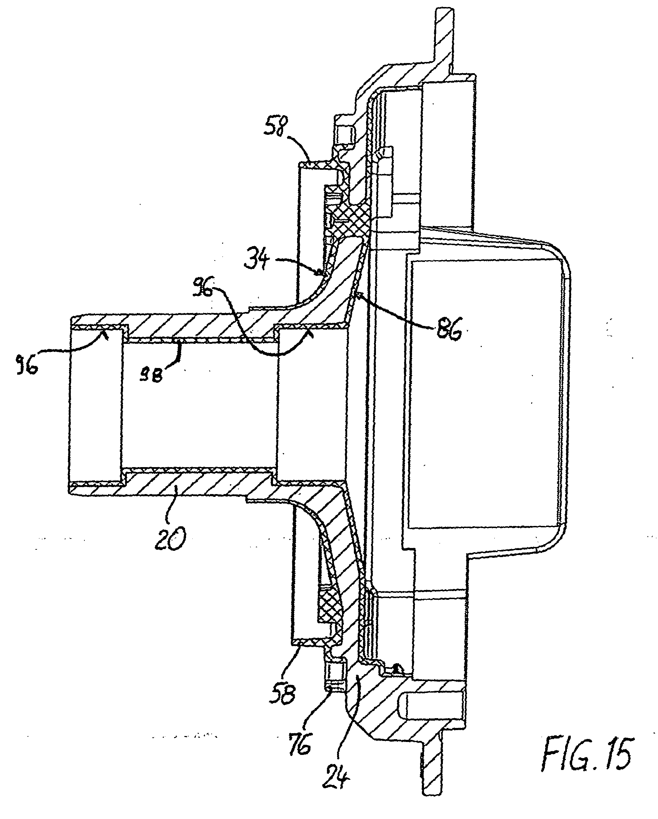

- Fig. 15: ein Einzelteil einer dritten Motorausführung in einem Axialschnitt analog zu Fig. 12.

In den verschiedenen Figuren der Zeichnung sind gleiche Teile stets mit den gleichen Bezugszeichen versehen und brauchen daher in der Regel auch jeweils nur einmal beschrieben zu werden.

Ein erfindungsgemäßer kollektorloser, elektronisch kommutierter Gleichstrommotor 1 ist als Außenläufermotor ausgebildet und besteht aus einem Stator 2 und einem den Stator 2 von einer Seite her als Teil eines Motorgehäuses 4 topfartig umschließenden Außenläufer 6. Auf der dem Außenläufer 6 axial gegenüberliegenden Seite schließt an den Stator 2 als weiterer Teil des Motorgehäuses 4 ein Elektronikgehäuse 8 an, welches eine Steuerelektronik 10 des Motors 1 enthält.

Der Außenläufer 6 besteht aus einem topfförmigen Rückschlusselement 12, das in seiner inneren Umfangsfläche Permanentmagnete 14 trägt. Der Stator 2 besteht aus einem Statorblechpaket 16 mit Statorwicklungen 18 zur Erzeugung eines magnetischen Drehfeldes zum Antrieb des Außenläufers 6 im Zusammenwirken mit dessen Permanentmagneten 14. Das Statorblechpaket 16 ist auf einem Lagertragrohr 20 befestigt (aufgepresst), welches in der dargestellten, bevorzugten Ausführung einstückig mit einem sich etwa senkrecht zur Läuferachse 22 erstreckenden Motorflansch 24 ausgebildet ist. Innerhalb des Lagertragrohrs 20 ist der Außenläufer 6 über seine Läuferwelle 26 und Drehlager 28 drehbar gelagert.

Der Motorflansch 24 bildet vorzugsweise auch gleichzeitig eine Bodenwandung 30 des Elektronikgehäuses 8; diese Bodenwandung 30 trennt den vom Außenläufer 6 umschlossenen Bereich des Stators 2 von der Steuerelektronik 10 innerhalb des Elektronikgehäuses 8 ab.

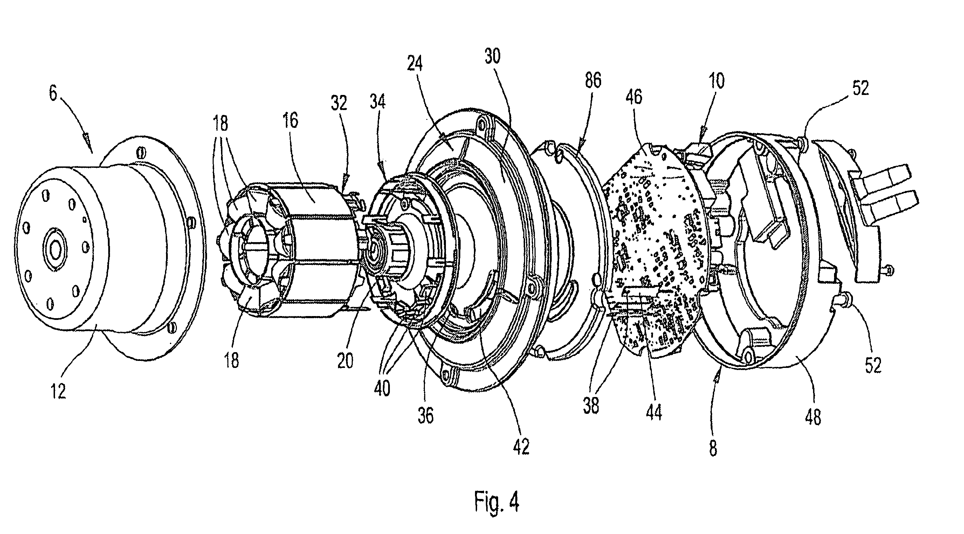

Axial zwischen einem von einer Stirnseite des bewickelten Statorblechpaketes 16 gebildeten Wickelkopf 32 und der Bodenwandung 30 des Elektronikgehäuses 8 ist ein im Wesentlichen scheibenförmiger Wickelkopfschutz 34 angeordnet, der bei der Ausführung gemäß Fig. 1 und 2, siehe dazu auch Fig. 4 bis 6 als gesondert vorgefertigtes Einzelteil kraftschlüssig auf dem Lagertragrohr 20 bzw. dem Motorflansch 24 sitzt. Die Bodenwandung 30 bzw. der Motorflansch 24 weist Durchführungen 36 (nur in Fig. 4 erkennbar) für nicht dargestellte Anschlusselemente auf, über die die Statorwicklungen 18 elektrisch mit der Steuerelektronik 10 verbunden sind. Diese Anschluss-Durchführungen 36 werden durch den Wicklkopfschutz 34 abgedichtet. Gemäß Fig. 5 und 6 weist hierzu der Wickelkopfschutz 34 korrespondierende, z. B. schlitzartige Durchführöffnungen 37 auf, die mit lippenartigen Dichtungen versehen sind, die dichtend an den durchgeführten Anschlusselementen anliegen. Hierzu kann es zweckmäßig sein, den Wickelkopfschutz 34 als Zweikomponenten-Kunststoffteil auszubilden, wobei der Wickelkopfschutz 34 größtenteils aus einem relativ formstabilen Material besteht, die lippenartigen Dichtungen aber aus einem relativ weicheren, elastischen Material angeformt sind.

Der Gleichstrommotor 1 kann als Sensormotor ausgebildet sein, wobei zur Kommutierungssteuerung der Statorwicklungen 18 die Steuerelektronik 10 die jeweilige Drehstellung des Außenläufers 6 über magnetfeldempfindliche Drehstellungssensoren 38 erfasst, die bevorzugt als Hall-IC's ausgebildet sind. Die Drehstellungssensoren 38 müssen in der Nähe der Permanentmagnete 14 angeordnet und elektrisch mit der Steuerelektronik 10 verbunden sein.

Um hierbei dennoch eine gute Abdichtung des Elektronikgehäuses 8 zu gewährleisten, ist erfindungsgemäß vorgesehen, dass der Wickelkopfschutz 34 für jeden Drehstellungssensor 38 eine in Richtung des Wickelkopfes 32 bzw. des Statorblechpaketes 16 axial vorspringende Aufnahmetasche 40 derart aufweist, dass der durch eine Durchführung 42 der Bodenwandung 30 (siehe hierzu insbesondere Fig. 2 und 4) mit der Steuerelektronik 10 verbundene und in der in Richtung des Stators 2 geschlossenen Aufnahmetasche 40 sitzende Drehstellungssensor 38 zur Erfassung des Magnetfeldes des Außenläufers 6 hinreichend nah an diesem angeordnet ist. Gemäß Fig. 2 steht der jeweilige Drehstellungssensor 38 dem Permanentmagnet 14 mit geringem Abstand radial gegenüber. Im dargestellten Ausführungsbeispiel sind drei Drehstellungssensoren 38 vorgesehen, die in jeweils einer separaten Aufnahmetasche 40 des Wickelkopfschutzes 34 sitzen.

Da es sich bei Hall-IC's um recht kleine Bauteile handelt, und da der Abstand der notwendigen Sensor-Plazierung von der Steuerelektronik 10 relativ groß sein kann, ist es vorteilhaft, wenn die Drehstellungssensoren 38 auf jeweils einem länglichen, streifenförmigen Träger 44 angeordnet sind, siehe hierzu insbesondere Fig. 3. Zweckmäßig ist jeder Träger 44 nach Art einer Leiterplatte ausgebildet und mechanisch sowie elektrisch durch die zugehörige Durchführung 42 der Bodenwandung 30 des Elektronikgehäuses 8 hindurch mit einer Leiterplatte 46 der Steuerelektronik 10 verbunden. Im dargestellten Beispiel ist jeder Träger 44 direkt über Anschlussstifte 45 mit der Leiterplatte 46 verlötet, es kann aber auch eine zusätzliche Steckverbindung vorgesehen sein.

Mit der Bodenwandung 30 bzw. dem Motorflansch 24 ist ein kappenartiger Deckel 48 des Elektronikgehäuses 8 lösbar und abgedichtet verbunden. Zur Abdichtung ist im Verbindungsbereich eine Dichtung 50 angeordnet. Die Befestigung erfolgt mittels geeigneter Schraubelemente 52; siehe Fig. 4.

Das Elektronikgehäuse 8 ist nach außen hin effektiv abgedichtet, und zwar durch den erfindungsgemäß ausgestalteten Wickelkopfschutz 34 einerseits und die Dichtung 50 des Deckels 48 andererseits.

Als zusätzliche Dichtungsmaßnahme ist bevorzugt vorgesehen, das zwischen dem Stator 2 und dem Außenläufer 6 eine Rotationsdichtung insbesondere in Form einer Labyrinthdichtung 54 vorgesehen ist. Hierdurch ist vorteilhafterweise das Motorgehäuse 4 praktisch gekapselt, so dass der Motor 1 einer hohen IP-Schutzart nach DIN/IEC EN 60034-Teil 5 entspricht, beispielsweise IP54.

Die Labyrinthdichtung 54 ist von mindestens drei axialen, sich zur Bildung eines im Axialschnitt gesehen U-förmig oder vorzugsweise mehrfach mäanderförmig, z. B. doppel-U-förmig verlaufenden Labyrinthspaltes 56 in radialer Richtung berührungsfrei überlappenden Ringstegen einerseits des Stators 2 und andererseits des Außenläufers 6 gebildet. In der dargestellten, bevorzugten Ausführung - siehe hierzu insbesondere Fig. 2 - wird die Labyrinthdichtung 54 von einem einstückig ausgebildeten Ringsteg 58 des Wickelkopfschutzes 34 gebildet, der hierzu berührungsfrei in eine zwischen zwei Ringstegen 60, 62 gebildete Ringnut 64 eines separaten, an dem Außenläufer 6 gehalterten Ringelementes 66 (siehe hierzu auch Fig. 9 bis 11) eingreift. Dieses Ringelement 66 ist bevorzugt mit dem Außenläufer 6 über eine schnappbare Form- oder Kraftformschlussverbindung 68 (Rastverbindung) verbunden. Gemäß Fig. 2 und 9 bis 11 geht dazu der äußere Ringsteg 62 in eine Aufnahme 70 über, mit der das Ringelement 66 axial auf einen Ringabschnitt 72 des Außenläufers 6 (siehe Fig. 2) aufgesteckt wird. Zur Verrastung ist im dargestellten Beispiel vorgesehen, dass der Ringsteg 62 einen radialen Vorsprung 74 aufweist, der in eine korrespondierende Ausnehmung im Inneren des Ringabschnittes 72 des Außenläufers 6 eingreift.

In weiterer vorteilhafter Ausgestaltung weist die Bodenwandung 30 bzw. der diese bildende Motorflansch 24 in einem sich radial nach außen über den Umfang des Außenläufers 6 hinaus erstreckenden Abschnitt einen axial vorspringenden, den Bereich der Labyrinthdichtung 54 zur Verlängerung und nochmaligen Umlenkung des Labyrinthspaltes 56 außen übergreifenden Ringsteg 76 auf. Dies trägt zu einer weiteren Verbesserung der Abdichtung bei.

Weiterhin kann mit Vorteil zwischen dem Wickelkopfschutz 34 und der Bodenwandung 30 bzw. dem Motorflansch 24 - vorzugsweise radial etwa im Bereich der Labyrinthdichtung 54 - ein Dichtelement 78 insbesondere in Form einer Schnurdichtung angeordnet sein (siehe auch hierzu wieder insbesondere Fig. 2).

Wie sich ferner aus Fig. 1 ergibt, weist der Motorflansch 24 mindestens einen in das Innere des Elektronikgehäuses 8 ragenden, als Kühlkörper 80 für mindestens ein elektronisches Leistungsbauelement 82 der Steuerelektronik 10 fungierenden Fortsatz auf. Indem der Motorflansch 24 aus einem gut wärmeleitfähigen Material, insbesondere Metall, besteht, wird die im Betrieb entstehende Wärme des Leistungsbauelementes 82 effektiv nach außen abgeführt. Für einen gut wärmeleitenden Kontakt kann das Leistungsbauelement 82 mittels eines Federelementes 84 gegen den Kühlkörper 80 angedrückt werden.

Weiterhin ist es zweckmäßig, wenn innerhalb des Elektronikgehäuses 8 zwischen der Bodenwandung 30 bzw. dem Motorflansch 24 und der Steuerelektronik 10 bzw. deren Leiterplatte 46 eine Abdeckscheibe 86 angeordnet ist, die in der ersten Ausführung des Motors gemäß Fig. 1, 2 und 4 analog zu dem Wickelkopfschutz 34 ebenfalls als gesondert vorgefertigtes Kunststoff-Formteil ausgebildet ist (siehe hierzu auch die gesonderten Darstellungen in Fig. 7 und 8) und korrespondierende Durchgrifföffnungen 88, 89 für die Anschlusselemente der Statorwicklungen und für die Drehstellungssensoren 38 bzw. deren Träger 44 aufweist. Hierbei kann die Abdeckscheibe 86 im Bereich der Durchgrifföffnungen 88, 89 Stegansätze 90 aufweisen, die sich in die entsprechenden Durchführungen 36, 42 der Bodenwandung 30 bzw. des Motorflansches 24 erstrecken und hier vorzugsweise dichtend mit entsprechenden Stegansätzen 92 des Wickelkopfschutzes 34 in Verbindung stehen. Auch diese Maßnahme trägt zu einer besonders sicheren Abdichtung der Durchführungen bei.

Aufgrund der praktisch gekapselten Ausführung des Motorgehäuses 4 sind bevorzugt Mittel zur inneren Kühlung durch innere Luftverwirbelung im Bereich des Stators 2 und/oder der Steuerelektronik 10 sowie in Kombination damit insbesondere Mittel zum Abführen der inneren Wärme nach außen an die Umgebung vorgesehen. Beim dargestellten Beispiel ist im Inneren des Elektronikgehäuses 10 zwischen dem Motorflansch 24 und der Leiterplatte 46 ein Lüfterrad 94 angeordnet, welches auf einem Fortsatz der Läuferwelle 26 sitzt und hierdurch gemeinsam mit dem Außenläufer 6 rotiert. Hierdurch wird innerhalb des Elektronikgehäuses 10 die Luft verwirbelt, so dass sogenannte Hotspots vermieden werden. Die Wärme wird dann über den metallischen Motorflansch 24 effektiv nach außen an die Umgebung abgeführt.

Bei der bisher beschriebenen Ausführungsform des Gleichstrommotors 1 sind der Wickelkopfschutz 34 und die bevorzugt vorgesehene Abdeckscheibe 86 jeweils als gesondert vorgefertigte Einzelteile ausgebildet (vgl. hierzu nochmals die gesonderten Darstellungen in Fig. 5 bis 8).

In Abweichung davon ist bei der zweiten Ausführungsform gemäß Fig. 12 bis 15 erfindungsgemäß vorgesehen, dass die Bodenwandung 30 des Elektronikgehäuses derart beidseitig mit einem elektrisch isolierenden Kunststoffmaterial umspritzt ist, dass durch das angespritzte Kunststoffmaterial auf der dem Stator zugewandten Seite der Wickelkopfschutz 34 und auf der dem Elektronikgehäuse 8 zugewandten Seite die Abdeckscheibe 86 gebildet sind. Durch das Anspritzen bzw. Umspritzen wird eine stoffschlüssige Verbindung mit der Bodenwandung 30 erreicht, wobei die Schichten im Bereich von Durchführungen einstückig ineinander übergehen (vergleiche hierzu insbesondere Fig. 13). Hierdurch wird eine optimale Dichtigkeit und Isolation des Elektronikgehäuses 8 mit ebenfalls verbesserter Kriechstromfestigkeit erreicht. Das oben zur ersten Ausführung beschriebene Dichtelement 78 (vgl. Fig. 2) kann dabei entfallen (Fig. 13).

In weiterer Ausgestaltung dieses speziellen Erfindungsgedanken ist gemäß Fig. 15 vorgesehen, dass sich das angespritzte Kunststoffmaterial ausgehend von der dem Elektronikgehäuse 8 zugewandten Abdeckscheibe 86 auch zur Bildung einer inneren Isolierschicht 98 in das Lagertragrohr 20 hinein zumindest bereichsweise über dessen Innenfläche hinweg, und zwar insbesondere zur Bildung von Kunststoff-Lagersitzen 96 über den Bereich der Drehlager 28 (in Fig. 15 nicht dargestellt, vergleiche deshalb Fig. 12 und 14), erstreckt. Dadurch sitzen die im Innenraum des Lagertragrohrs 20 angeordneten Drehlager 28 mit ihren Außenringen in den aus Kunststoff gebildeten Lagersitzen 96. Dies hat zur Folge, dass eine gesonderte Isolation der Läuferwelle 26 vorteilhafterweise entfallen kann, da durch diese Maßnahme die ansonsten bei Gleichstrommotoren bei hohen Schaltfrequenzen auftretenden Lagerströme vermieden werden. Die Lagersitze 96 lassen sich durch das Kunststoffmaterial auch vorteilhaft leicht nachbearbeiten, um die Kunststoffstärke zu reduzieren oder um einen selbstzentrierenden Lagersitz zu integrieren.

Wie sich aus Fig. 12 und 13 ergibt ist diese Ausführung mit in einem Arbeitsgang umspritzter Bodenwandung 30 einerseits für sensorgesteuerte Motoren geeignet, indem analog zu Fig. 1 und 2 für jeden Drehstellungssensor 38 eine Aufnahmetasche 40 gebildet ist. Alternativ dazu eignet sich diese umspritzte Ausführung aber durchaus auch für sensorlose Motoren, so dass Aufnahmetaschen 40 entfallen können.

Die besonderen Vorteile der umspritzten Version sind:
- kostengünstig
- prozeßsicher
- Multifunktionsteil, welches Wickelkopfschutz und elektronikseitige Abdeckung ersetzt bzw. zu einem Teil zusammenfasst
- Verkürzung der Montagezeiten
- geringere Anzahl von Einzelteilen.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im unabhängigen Anspruch jeweils definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch zu verstehen.

## Patentansprüche

1. Kollektorloser, elektronisch kommutierter Gleichstrommotor (1), mit einem Stator (2) und einem den Stator (2) von einer Seite her als Teil eines Motorgehäuses (4) topfartig umschließenden Außenläufer (6) sowie einem sich als weiterer Teil des Motorgehäuses (4) auf der dem Außenläufer (6) axial gegenüberliegenden Seite anschließenden, eine Steuerelektronik (10) enthaltenden Elektronikgehäuse (8), wobei axial zwischen einem Wickelkopf (32) des Stators (2) und einer sich quer zu einer Läuferachse (22) erstreckenden Bodenwandung (30) des Elektronikgehäuses (8) ein im Wesentlichen scheibenförmiger Wickelkopfschutz (34) zur Abdichtung von Anschluss-Durchführungen (36) der Bodenwandung (30) angeordnet ist,
**dadurch gekennzeichnet, dass** der Wickelkopfschutz (34) mindestens eine in Richtung des Wickelkopfes (32) vorspringende Aufnahmetasche (40) für einen magnetfeldempfindlichen Drehstellungssensor (38) derart aufweist, dass der durch eine Durchführung (42) der Bodenwandung (30) mit der Steuerelektronik (10) verbundene und in der in Richtung des Wickelkopfes (32) geschlossenen Aufnahmetasche (40) sitzende Drehstellungssensor (38) zur Erfassung eines Magnetfeldes des Außenläufers (6) hinreichend nah an diesem angeordnet ist und auf einem länglichen, streifenförmigen und in die zugehörige Aufnahmetasche eingreifenden Träger sitzt, der nach Art einer Leiterplatte ausgebildet ist.

2. Gleichstrommotor nach Anspruch 1,
**dadurch gekennzeichnet, dass** mehrerebeispielsweisedrei Drehstellungssensoren (38) vorgesehen sind, die in jeweils einer separaten Aufnahmetasche (40) des Wickelkopfschutzes (34) sitzen.

3. Gleichstrommotor nach Anspruch 1 oder 2,
**dadurch gekennzeichnet, dass** der nach Art einer Leiterplatte ausgebildete Träger (44) mechanisch und elektrisch durch die zugehörige Durchführung (42) der Bodenwandung (30) des Elektronikgehäuses (8) hindurch mit einer Leiterplatte (46) der Steuerelektronik (10) verbunden ist.

4. Gleichstrommotor nach einem der Ansprüche 1 bis 3,
**dadurch gekennzeichnet, dass** Verbindungselemente zum elektrischen Anschluss von Statorwicklungen (18) an der Steuerelektronik (10) einerseits die Anschluss-Durchführungen (36) der Bodenwandung (30) sowie andererseits abgedichtet korrespondierende Öffnungen (37) des Wickelkopfschutzes (34) durchgreifen.

5. Gleichstrommotor nach einem der Ansprüche 1 bis 4,
**dadurch gekennzeichnet, dass** die Bodenwandung (30) des Elektronikgehäuses (8) von einem Motorflansch (24) gebildet ist, der insbesondere einstückig mit einem eine Läufer-Drehlagerung (28) aufnehmenden Lagertragrohr (20) ausgeführt ist.

6. Gleichstrommotor nach einem der Ansprüche 1 bis 5,
**gekennzeichnet durch** einen mit der Bodenwandung (30) lösbar und vorzugsweise über einen Dichtring (50) abgedichtet verbundenen Deckel (48) des Elektronikgehäuses (8).

7. Gleichstrommotor nach einem der Ansprüche 1 bis 6,
**dadurch gekennzeichnet, dass** zwischen dem Stator (2) und dem Außenläufer (6) eine Rotationsdichtung insbesondere in Form einer Labyrinthdichtung (54) vorgesehen ist.

8. Gleichstrommotor nach Anspruch 7,
**dadurch gekennzeichnet, dass** die Labyrinthdichtung (54) von axialen, sich zur Bildung eines Labyrinthspaltes (56) in radialer Richtung berührungsfrei überlappenden Ringstegen (58, 60, 62) einerseits des Stators (2), insbesondere des Wickelkopfschutzes (34), und andererseits des Außenläufers (6), insbesondere eines separaten, an dem Außenläufer (6) gehaltenen Ringelementes (66), gebildet ist.

9. Gleichstrommotor nach Anspruch 8,
**dadurch gekennzeichnet, dass** das Ringelement (66) mit dem Außenläufer (6) über eine schnappbare Form- oder Kraftformschlussverbindung (68) verbunden ist.

10. Gleichstrommotor nach einem der Ansprüche 1 bis 9,
**dadurch gekennzeichnet, dass** das Elektronikgehäuse (8) gegenüber dem Außenläufer (6) in radialer Richtung größer ausgebildet ist, wobei vorzugsweise die Bodenwandung (30) bzw. der diese bildende Motorflansch (24) einen axial vorspringenden, den Bereich der Labyrinthdichtung (54) zur Verlängerung des Labyrinthspaltes (56) außen übergreifenden Ringsteg (76) aufweist.

11. Gleichstrommotor nach einem der Ansprüche 1 bis 10,
**dadurch gekennzeichnet, dass** die Bodenwandung (30) des Elektronikgehäuses (8) mindestens einen ins Gehäuseinnere ragenden, als Kühlkörper (80) für mindestens ein elektronisches Leistungsbauelement (82) der Steuerelektronik (10) fungierenden Fortsatz aufweist.

12. Gleichstrommotor nach einem der Ansprüche 1 bis 11,
**gekennzeichnet durch** Mittel zur inneren Kühlung **durch** innere Luftverwirbelung im Bereich des Stators (2) und/oder der Steuerelektronik (10) sowie insbesondere **durch** Mittel zum Abführen der inneren Wärme nach außen an die Umgebung.

13. Gleichstrommotor nach einem der Ansprüche 1 bis 12,
**dadurch gekennzeichnet, dass** derWickelkopfschutz (34) als ein gesondert vorgefertigtes Einzelteil, insbesondere als Kunststoff-Spritzformteil, ausgebildet ist.

14. Gleichstrommotor nach einem der Ansprüche 1 bis 13,
**dadurch gekennzeichnet, dass** zwischen dem Wickelkopfschutz (34) und dem Motorflansch (24), vorzugsweise radial etwa im Bereich der Labyrinthdichtung (54), ein Dichtelement (78), insbesondere eine Schnurdichtung, angeordnet ist.

15. Gleichstrommotor nach einem der Ansprüche 1 bis 14,
**dadurch gekennzeichnet, dass** innerhalb des Elektronikgehäuses (8) zwischen der Bodenwandung (30) und der Steuerelektronik (10) eine Abdeckscheibe (86) angeordnet ist, die korrespondierende Durchgriffsöffnungen (88, 89) für Wicklungsanschlüsse und Drehstellungssensoren (38) aufweist.

16. Gleichstrommotor nach Anspruch 15,
**dadurch gekennzeichnet, dass** dieAbdeckscheibe(86)als ein gesondert vorgefertigtes Einzelteil, insbesondere als Kunststoff-Spritzformteil, ausgebildet ist.

17. Gleichstrommotor nach Anspruch 15 oder 16,
**dadurch gekennzeichnet, dass** dieAbdeckscheibe(86)im Bereich der Durchgriffsöffnungen (88 ,89) Stegansätze (90) aufweist, die sich in die Durchführungen (36, 42) der Bodenwandung (30) erstrecken und vorzugsweise dichtend mit entsprechenden Stegansätzen (92) des Wickelkopfschutzes (34) in Verbindung stehen.

18. Gleichstrommotor nach einem der Ansprüche 1 bis 12 und Anspruch 15 oder nach dem Oberbegriff des Anspruchs 1,
**dadurch gekennzeichnet, dass** die Bodenwandung (30) des Elektronikgehäuses (8) derart beidseitig mit Kunststoff umspritzt ist, dass durch das angespritzte Kunststoffmaterial auf der dem Stator (2) zugewandten Seite der Wickelkopfschutz (34) und auf der dem Elektronikgehäuse (8) zugewandten Seite die bzw. eine Abdeckscheibe (86) gebildet sind.

19. Gleichstrommotor nach Anspruch 18,
**dadurch gekennzeichnet, dass** sich das angespritzte Kunststoffmaterial ausgehend von der dem Elektronikgehäuse (8) zugewandten Seite auch zur Bildung einer inneren Isolierschicht (98) in das Lagertragrohr (20) hinein zumindest bereichsweise über dessen Innenfläche, insbesondere zur Bildung von Kunststoff-Lagersitzen (96) über den Bereich von Drehlagern (28), erstreckt.

## Claims

1. Brushless, electronically commutated DC motor (1), having a stator (2) and an external rotor (6) enclosing the stator (2) in a pot-like manner from one side as part of a motor housing (4), as well as an adjoining electronics housing (8), as a further part of the motor housing (4), on the side axially opposite the external rotor (6) and containing control electronics (10), there being arranged axially between a winding overhang (32) of the stator (2) and a bottom wall (30), extending transversely with respect to a rotor axis (22), of the electronics housing (8) a substantially disc-shaped winding overhang protector (34) for sealing off connection leadthroughs (36) in the bottom wall (30),
**characterised in that** the winding overhang protector (34) has at least one receiving pocket (40), projecting in the direction of the winding overhang (32), for a magnetic-field-sensitive rotary-position sensor (38), such that the rotary-position sensor (38), connected to the control electronics (10) through a leadthrough (42) in the bottom wall (30) and seated in the receiving pocket (40) closed in the direction of the winding overhang (32), is arranged, for detection of a magnetic field of the external rotor (6), sufficiently close to the latter and is seated on an elongated, strip-shaped carrier engaging in the associated receiving pocket and designed in the manner of a printed circuit board.

2. DC motor according to Claim 1,
**characterised in that** a plurality of rotary-position sensors (38), for example three of them, which are each seated in a separate receiving pocket (40) of the winding overhang protector (34) are provided.

3. DC motor according to Claim 1 or 2,
**characterised in that** the carrier (44) designed in the manner of a printed circuit board is mechanically and electrically connected to a printed circuit board (46) of the control electronics (10) through the associated leadthrough (42) in the bottom wall (30) of the electronics housing (8).

4. DC motor according to one of Claims 1 to 3,
**characterised in that** connection elements for electrically connecting stator windings (18) to the control electronics (10) pass, on the one hand, through the connection leadthroughs (36) in the bottom wall (30) and, on the other hand, in a sealed-off manner through corresponding openings (37) in the winding overhang protector (34).

5. DC motor according to one of Claims 1 to 4,
**characterised in that** the bottom wall (30) of the electronics housing (8) is formed by a motor flange (24) which is constructed, in particular, in one piece with a bearing support tube (20) receiving a rotor rotary bearing (28).

6. DC motor according to one of Claims 1 to 5,
**characterised by** a cover (48) of the electronics housing (8), which cover is detachably connected to the bottom wall (30) and preferably in a manner sealed off by a sealing ring (50).

7. DC motor according to one of Claims 1 to 6,
**characterised in that** a rotating seal, in particular in the form of a labyrinth seal (54), is provided between the stator (2) and the external rotor (6).

8. DC motor according to Claim 7,
**characterised in that** the labyrinth seal (54) is formed by axial annular webs (58, 60, 62) which overlap without contact in the radial direction to form a labyrinth gap (56) and belong, on the one hand, to the stator (2), in particular the winding overhang protector (34), and, on the other hand, to the external rotor (6), in particular a separate annular element (66) held on the external rotor (6).

9. DC motor according to Claim 8,
**characterised in that** the annular element (66) is connected to the external rotor (6) via a snap-action form- or force-fitting connection (68).

10. DC motor according to one of Claims 1 to 9,
**characterised in that** the electronics housing (8) is designed larger than the external rotor (6) in the radial direction, the bottom wall (30) or the motor flange (24) forming the latter preferably having an axially projecting annular web (76) externally reaching over the region of the labyrinth seal (54) to extend the labyrinth gap (56).

11. DC motor according to one of Claims 1 to 10,
**characterised in that** the bottom wall (30) of the electronics housing (8) has at least one extension projecting into the interior of the housing and acting as a cooling element (80) for at least one electronic power component (82) of the control electronics (10).

12. DC motor according to one of Claims 1 to 11,
**characterised by** means for internal cooling by internal air swirling in the region of the stator (2) and/or of the control electronics (10), as well as, in particular, by means for carrying away the internal heat outwards to the surroundings.

13. DC motor according to one of Claims 1 to 12,
**characterised in that** the winding overhang protector (34) is designed as a separately prefabricated individual part, in particular a plastic injection moulding.

14. DC motor according to one of Claims 1 to 13,
**characterised in that** a sealing element (78), in particular a cord seal, is arranged between the winding overhang protector (34) and the motor flange (24), preferably radially approximately in the region of the labyrinth seal (54).

15. DC motor according to one of Claims 1 to 14,
**characterised in that** there is arranged inside the electronics housing (8), between the bottom wall (30) and the control electronics (10), a covering disc (86) having corresponding through-openings (88, 89) for winding terminations and rotary-position sensors (38),

16. DC motor according to Claim 15,
**characterised in that** the covering disc (86) is designed as a separately prefabricated individual part, in particular a plastic injection moulding.

17. DC motor according to Claim 15 or 16,
**characterised in that** the covering disc (86) has, in the region of the through-openings (88, 89), web projections (90) which extend into the leadthroughs (36, 42) in the bottom wall (30) and are preferably sealingly connected to corresponding web projections (92) of the winding overhang protector (34).

18. DC motor according to one of Claims 1 to 12 and Claim 15 or according to the precharacterising clause of Claim 1,
**characterised in that** the bottom wall (30) of the electronics housing (8) is encapsulated by injection moulding with plastic on both sides in such a way that the moulded-on plastic material on the side facing the stator (2) forms the winding overhang protector (34) and that on the side facing the electronics housing (8) forms the or a covering disc (86) .

19. DC motor according to Claim 18,
**characterised in that**, starting from the side facing the electronics housing (8), the moulded-on plastic material also extends into the bearing support tube (20), at least in certain regions over the inner surface thereof, in order to form an inner insulating layer (98), and in particular in order to form plastic bearing seats (96) over the region of rotary bearings (28).

## Revendications

1. Moteur à courant continu (1) commuté électroniquement, sans collecteurs, avec un stator (2) et un rotor externe (6) enserrant le stator (2) d'un côté à la manière d'un pot, comme partie d'un carter de moteur (4), ainsi qu'un boîtier électronique (8) se raccordant du côté axialement opposé au rotor externe (6) comme autre partie du carter de moteur (4), contenant une électronique de commande (10), sachant qu'axialement, entre une tête de bobinage (32) du stator (2) et une paroi de fond (30) du boîtier électronique (8) s'étendant transversalement à un axe du rotor (22), un protecteur de tête de bobinage (34) essentiellement en forme de disque est disposé pour l'étanchement des traversées de raccordement (36) de la paroi de fond (30),
**caractérisé en ce que** le protecteur de tête de bobinage (34) comporte au moins une poche de réception (40), dépassant en direction de la tête de bobinage (32), pour un capteur de position de rotation (38) sensible au champ magnétique, de telle sorte que le capteur de position de rotation (38) relié par une traversée (42) de la paroi de fond (30) à l'électronique de commande (10) et se trouvant dans la poche de réception (40) fermée en direction de la tête de bobinage (32), est disposé suffisamment près du rotor externe (6) pour la saisie d'un champ magnétique de celui-ci, et se trouve sur un support allongé, en forme de bande et venant en prise dans la poche de réception correspondante, qui est configuré à la manière d'une plaque à circuit imprimé.

2. Moteur à courant continu selon la revendication 1,
**caractérisé en ce que** plusieurs capteurs de position de rotation (38) sont prévus, par exemple trois, qui se trouvent chacun dans une poche de réception (40) séparée du protecteur de tête de bobinage (34).

3. Moteur à courant continu selon la revendication 1 ou 2,
**caractérisé en ce que** le support 44 configuré à la manière d'une plaque à circuit imprimé est relié mécaniquement et électriquement à travers la traversée (42) correspondante de la paroi de fond (30) du boîtier électronique (8) à une plaque à circuit imprimé (46) de l'électronique de commande (10).

4. Moteur à courant continu selon l'une des revendications 1 à 3,
**caractérisé en ce que**, pour la connexion électrique d'enroulements de stator (18) à l'électronique de commande (10), des éléments de connexion traversent d'une part les traversées de raccordement (36) de la paroi de fond (30), de même que d'autre part des ouvertures (37) correspondantes étanchées du protecteur de tête de bobinage (34).

5. Moteur à courant continu selon l'une des revendications 1 à 4,
**caractérisé en ce que** la paroi de fond (30) du boîtier électronique (8) est formée par une bride du moteur (24) qui est en particulier réalisée en une pièce avec un tube support de palier (20) accueillant le palier tournant du rotor (28).

6. Moteur à courant continu selon l'une des revendications 1 à 5,
**caractérisé par** un couvercle (48) du boîtier électronique (8), relié de façon démontable à la paroi de fond (30) et étanché de préférence par l'intermédiaire d'une bague d'étanchéité (50).

7. Moteur à courant continu selon l'une des revendications 1 à 6,
**caractérisé en ce qu'**entre le stator (2) et le rotor externe (6), un joint tournant est prévu, en particulier sous la forme d'un joint à labyrinthe (54).

8. Moteur à courant continu selon la revendication 7,
**caractérisé en ce que** le joint à labyrinthe (54) est formé par des nervures annulaires (58, 60, 62) axiales se chevauchant sans contact dans la direction radiale pour la formation d'un interstice de labyrinthe (56), du stator (2) d'un côté, en particulier du protecteur de tête de bobinage (34), et du rotor externe (6) de l'autre côté, en particulier d'un élément annulaire (66) séparé maintenu sur le rotor externe (6).

9. Moteur à courant continu selon la revendication 8,
**caractérisé en ce que** l'élément annulaire (66) est relié au rotor externe (6) par une liaison encliquetable par conjugaison de forme ou par adhérence (68).

10. Moteur à courant continu selon l'une des revendications 1 à 9,
**caractérisé en ce que** le boîtier électronique (8) est configuré dans la direction radiale plus grand en comparaison du rotor externe (6), sachant que de préférence la paroi de fond (30), respectivement la bride du moteur (24) qui la forme, comporte une nervure annulaire (76) dépassant axialement, enserrant à l'extérieur la zone du joint à labyrinthe (54) pour un allongement de l'interstice de labyrinthe (56).

11. Moteur à courant continu selon l'une des revendications 1 à 10,
**caractérisé en ce que** la paroi de fond (30) du boîtier électronique (8) comporte au moins un prolongement dépassant dans l'intérieur du carter, fonctionnant comme radiateur (80) pour au moins un composant électronique de puissance (82) de l'électronique de commande (10).

12. Moteur à courant continu selon l'une des revendications 1 à 11,
**caractérisé par** des moyens pour un refroidissement intérieur par turbulence intérieure de l'air dans la zone du stator (2) et/ou de l'électronique de commande (10), ainsi qu'en particulier par des moyens pour l'évacuation de la chaleur intérieure à l'extérieur, dans le milieu environnant.

13. Moteur à courant continu selon l'une des revendications 1 à 12,
**caractérisé en ce que** le protecteur de tête de bobinage (34) est configuré comme une pièce individuelle préfabriquée spécialement, en particulier comme une pièce en matière plastique moulée par injection.

14. Moteur à courant continu selon l'une des revendications 1 à 13,
**caractérisé en ce qu'**un élément d'étanchéité (78), en particulier un joint filiforme, est disposé entre le protecteur de tête de bobinage (34) et la bride du moteur (24), de préférence radialement à peu près dans la zone du joint à labyrinthe (54).

15. Moteur à courant continu selon l'une des revendications 1 à 14,
**caractérisé en ce qu'**à l'intérieur du boîtier électronique (8), entre la paroi de fond (30) et l'électronique de commande (10), est disposé un disque de recouvrement (86), qui comporte des ouvertures de passage (88, 89) correspondantes pour les branchements de l'enroulement et pour les capteurs de position de rotation (38).

16. Moteur à courant continu selon la revendication 15,
**caractérisé en ce que** le disque de recouvrement (86) est configuré comme une pièce individuelle préfabriquée spécialement, en particulier comme une pièce en matière plastique moulée par injection.

17. Moteur à courant continu selon la revendication 15 ou 16,
**caractérisé en ce que** le disque de recouvrement (86) comporte dans la zone des ouvertures de passage (88, 89) des saillies en nervures (90) qui s'étendent dans les traversées (36, 42) de la paroi de fond (30) et se trouvent de préférence en liaison d'étanchéité avec les saillies en nervures (92) correspondantes du protecteur de tête de bobinage (34).

18. Moteur à courant continu selon l'une des revendications 1 à 3 et la revendication 15, ou selon le préambule de la revendication 1
**caractérisé en ce que** la paroi de fond (30) du boîtier électronique (8) est enrobée de plastique par pulvérisation des deux côtés, de telle sorte que, par la matière plastique appliquée par pulvérisation, sont formés du côté tourné vers le stator (2) le protecteur de tête de bobinage (34), et du côté tourné vers le boîtier électronique (8) le, respectivement un disque de recouvrement (86).

19. Moteur à courant continu selon la revendication 18,
**caractérisé en ce que** la matière plastique appliquée par pulvérisation s'étend aussi, en partant du côté tourné vers le boîtier électronique (8), dans le tube support de palier (20) pour la formation d'une couche isolante intérieure (98), au moins de loin en loin sur sa surface intérieure, en particulier pour la formation de sièges de palier en plastique (96) sur la zone des paliers tournants (28).
